Europäisches Patentamt

European Patent Office

Office européen des brevets

(19)

(11) Publication number: **0 330 534**
**A2**

(12) # EUROPEAN PATENT APPLICATION

(21) Application number: **89400283.1**

(22) Date of filing: **01.02.89**

(51) Int. Cl.⁴: **B 60 B 7/00**

(30) Priority: **02.02.88 KR 881204**

(43) Date of publication of application:
**30.08.89 Bulletin 89/35**

(84) Designated Contracting States: **DE FR GB IT**

(71) Applicant: **Park, Seung Moon**
**92-12, Yon-hee 2 dong**
**Seodaemunku Seoul 120 (KR)**

(72) Inventor: **Park, Seung Moon**
**92-12, Yon-hee 2 dong**
**Seodaemunku Seoul 120 (KR)**

(74) Representative: **Chauchard, Robert et al**
**c/o Cabinet Malémont 42, avenue du Président Wilson**
**F-75116 Paris (FR)**

(54) **Stationary billboard on the hub cap.**

(57) The invention relates to an automobile hub cap on the center of which the static lateral axle is supported by the bearing and the bush with the ribs provided at the center of the said static lateral axle, having the said bush installed at the center of the said bush and the bearing fixed by the nut on the supporting plate fixed by the screw on the boss of the said hub cap; having the clutch plate fixed by the bolt with the eccentric bob at the inner end of the static lateral axle, with the static billboard of selective eccentric bobs, fixed by the bolt at the outer end of the the static lateral axle;having provided with the ring-shape sealing rubber between the hub cap and the supporting plate.

A structure has stored lubricating oil between the internal spaces formed by the hub camp and its cover under the condition in which the inside of the hub cap is covered.

FIG. 2

# Description

## Stationary Billboard on the Hub Cap

### 2. Simple Description of Drawings

Figure 1 is a perspective view of the invention.

Figure 2 is a cross-sectional view of the invention.

Figure 3 is a view of the invention in use.

Figure 4 is a cross-sectional view of the invention for other application.

Figure 5 is also a cross-sectional view of the invention for other application.

\* Description of Numeral Codes for the Major Portions of the Drawings

| | | |
|---|---|---|
| 11, 111, 112 | : | Stationary Billboard |
| 12, 122 | : | Hub Cap |
| 13, 131 | : | Stationary lateral axle |
| 14 | : | Bush |
| 15, 151, 152 | : | Supporting Plate |
| 16 | : | Bearings |
| 161 | : | Roller Bearings |
| 17 | : | Rib |
| 171 | : | ring |
| 18 | : | Groove |
| 19, 23, 24, 26 | : | Bolts |
| 20, 231, 241 | : | Nuts |
| 21, 25, | : | Eccentric Bob |
| 22, 221 | : | Clutch Plate |
| 27 | : | Boss |
| 28, 281 | : | Screws |
| 29 | : | Cover |
| 30 | : | Ventilation hole |

### 3. Detailed Description of the Invention

This present invention relates to an automobile hub cap with a stationary billboard thereon capable of maintaining its static condition during the operation of the automobile. The hub cap under this present invention will have a billboard on it, which will maintain its static condition, in harmony with its decorative effects, in order to improve the advertising effects at the same time.

In line with the recent industrial development, the advertising media have developed in variety, and nowadays ceaseless flows of automobiles can be seen on the street in any city in Korea.

In the past, the hub cap of an automobile during operation and no static thing attached thereon that produces esthetic effects.

This present invention is designed to use as an advertising medium the hub cap that is put on the wheel drum for ornamental purpose. The purpose of this present in vention is to fix on the center of the rolling hub cap a billboard that can maintain its static condition and powerfully attract careful attention of the passers-by, that the most use of the highly congested road space in cities may be assured for an advertising medium by putting an advertising plate on the hub cap of the automobiles jamming the street, and, further, that the automobile may be provided with hub caps with static billboards that will greatly enhance the ornamental effects of the caps.

The present invention is largely characterized with the effects of catching the eyes of passers-by by putting the static billboard capable of maintaining its static condition and the rolling hub cap in mutual harmony.

Under this present invention, the static lateral axle at the center of the hub cap is supported by the bush and bearings, and the static lateral axle is provided with a rib at its middle. The said bush is installed at the center of the hub cap and the said bearings are fixed with nuts on the supported place that is fixed on the boss of the hub cap with screws;

At the inner end of the the static lateral axle is the clutch disk fixed with an eccentric bob by screws, and the static billboard with an eccentric bob is fixed at the outer end of the static lateral axle; and

The shape of the eccentric bob of the this static billboard is characterized by a shape of windbreaks having intervals of a certain distance to the static billboard and the ventilation holes provided at the same time.

The detailed description of this present invention is made as follows in accordance with the drawings attached herewith:

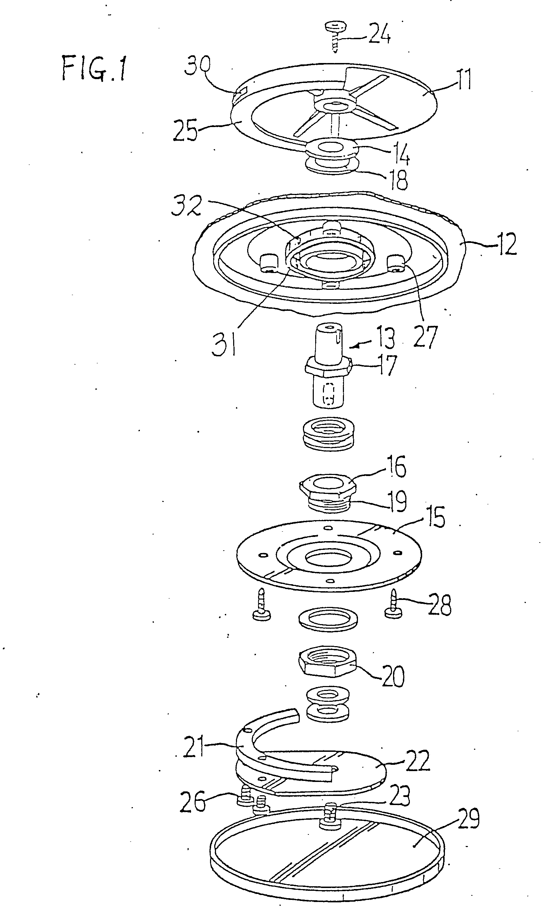

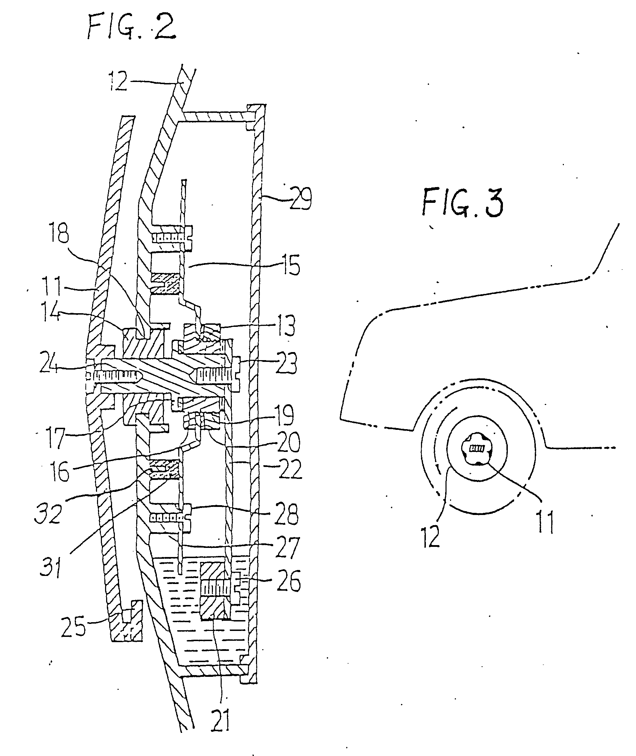

Figures 1 and 2 illustrates an example of application of this present invention.

The static billboard (11) is fixed on the static lateral axle (13) that is supported at the center of the rolling hub cap.(12)

The hub cap (12) is the part that moves under a variety of condition in accordance with the operation conditions of the automobile, such as stopping, slow running, and speedy running, and the static billboard (11) is largely a static part that maintains its static condition. Therefore, by harmonizing these two mutually contrasting parts together, they can readily catch the eyes of passers-by and invite the attention of the general public.

To harmonize these parts together, a variety of colors can be made available with various forms, such as brown-colored concentric circle or a radial form for the rolling portion, and a circle, a triangle, a star shape, or a form of heart.

The static lateral axle (13) is supported by the bearings that are installed on the bush (14) and the supporting plate (15) at the center of the hub cap, and the central rib (17) is formed between the bush (14) and the bearing (16) so that a fixed distance may be maintained between the static billboard (11) and the hub cap (12).

In other words, the rib (17) has a function to maintain the static lateral axle (13) under stable condition without being detached.

The bearing (16) can be assembled with the bolt (19) and the nut (20), and, this way of assembly may be changed for convenience' sake during its manufacturing.

The clutch plate (22) is fixed by the bolt (23) with one eccentric bob (21) at the inner end of the static lateral axle (13), and another eccentric bob (25) is provided at the lower part of the static billboard (11) that is fixed by the bolt (25) at the outer end of the static lateral axle (13). Therefore, the billboard can maintain its stability and static condition even during the rolling of the hub cap (12).

The total weight of these two eccentric bobs (21) and (25) should be large enough to hold the static billboard (11) with gravity during the rolling of the hub cap.

Also, the shape of the eccentric bob (25) is in the form of a windbreak having an interval of a certain length between the static billboard (11) and the bob itself, and, as a ventilation hole (30) is provided to insure a smooth flow of the air of this interval, the eccentric bob (25) receives a more stable air resistance during the operation of the automobile, makin the static billboard (11) more stable.

The eccentric bob, just as the case of the static billboard (11), can be manufactured through the selection of an appropriate way, such as assembling it with the bolt (26) or working out the other way of adhesion.

The supporting plate (15) is fixed in the hub cap (12) on the boss (27) with the screw (28).It can be fixed by using an adhesives without the screw.

The bearing (16) and the clutch plate (15), respectively inside of the hub cap (12), are protected from external moisture or dust as their covers are sealed by an adhesive or liquid bond.

In the space formed between the hub cap (12) and its cover (29) is stored with lubricating oil to smooth the action of the bearing (16).

With a ring-shape sealing rubber (31) provided between the hub cap (12) and the supporting plate (15), the lubricating oil is made not to leak at all into the space between the the static lateral axle (13) and the bush (14).

The ring-shape sealing rubber (31) is made to be inserted between the four pins (32) placed inside the hub cap (12).

The following is the explanation on this present invention for other applications:

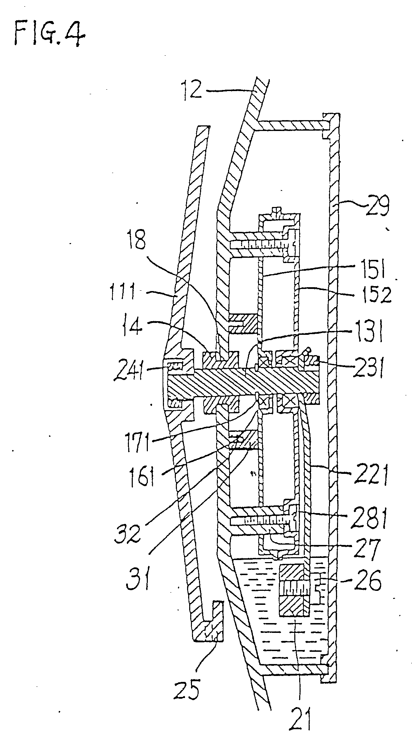

As indicated in Figure 4, the inner and outer ends of the static lateral axle (131) are provided with a flat portion and a spiral form from which respectively play a role of the key grooves. These flat portions are in gear with the key groove formed on the static billboard (111) and the clutch plate (221), and the static billboard (111) and the clutch plate (221) are fixed respectively by the nuts (231) and (241).

By installing the roller bearing (161) between the supporting plate (151) and (152) and the static lateral axle (131), it is made to cause a relative movement between the clutch plate (151) and (152) and the static lateral axle (131).

The snap ring (171) plays a role of maintaining a fixed distance between the static billboard (111) and the hub cap (12) by preventing the roller bearing (151) from being detached and by keeping the static lateral axle (131) from being loosened.

The two symmetrical clutch plates (151) and (152) are fixed on the boss (27) by the screw (281) in a form overlapping each other.

The other structure and the principle of operation are the same as the first example of application and, therefore, their explanation is omitted here.

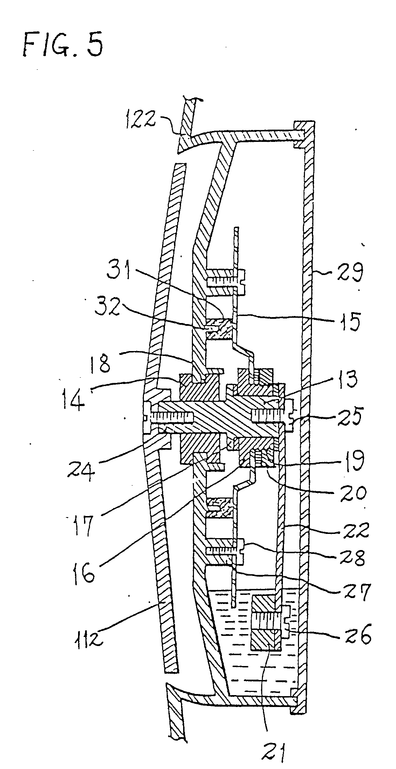

Another example of application of this present invention is as indicated in Figure 5.

In this example of application, the shape of the hub cap (122) is made to refractive in close approximity to the edge of the circumference of the static billboard (112), and, for this reason, not only will it be possible to enhance ornamental effects but also it can keep the moisture from snow or rain during the winter season from getting into the space between the hub cap (122) and the static billboard (122). Thus, it is possible to solve in advance the problem of simultaneous rolling of the static billboard (112) and the hub cap (122) that may be caused due to the inflow of rain water and moisture from snow, and subsequent freezing.

Also, in this example of application, the static billboard is not provided with the eccentric bob.

Instead, the weight of the the eccentric bob (21) installed on the clutch plate (22) is large enough to sustain the static billboard (112) under a proper condition during the rolling of the hub cap.

The other structure and the principle of operation are the same as the first example of application, and therefore, their explanation is omitted here.

As in the foregoing, this present invention is to place the static billboard, which is an immobile part, on the hub cap of the automobile, on which the trademark of the automobile or other commercial ads can be placed with a powerful effect of cating the eyes of the general public, thereby enhancing the effective ness of advertising and the use efficiency of road spaces in cities, and improving the ornamental effects of the hub cap by harmonizing the cap with the static billboard.

## Claims

1. The automobile hub cap on the center of which the static lateral axle is supported by the bearing and the bush with the ribs provided at the center of the said static lateral axle, having the said bush installed at the center of the said bush and the bearing fixed by the nut on the supporting plate fixed by the screw on the boss of the said hub cap; having the clutch plate fixed by the bolt with the eccentric bob at the inner end of the static lateral axle, with the static billboard of selective eccentric bobs, fixed by the bolt at the outer end of the static lateral axle; having provided with the ring-shape sealing rubber between the hub cap and the supporting plate; and

The hub cap with the static billboard, characterized by a structure having stored lublicating oil between the internal spaces formed by the hub camp and its cover over the condition in which the inside of the hub cap is covered.

2. The circumference of the Static Billboard as Set Forth in Claim 1: The hub cap with the static billboard cahacterized by the refractive shape in close approximity to the edge of the hub cap.

FIG.1

FIG. 2

FIG. 3

FIG.4

FIG. 5